# FASCICULE DE BREVET EUROPEEN

(11) **EP 0 678 322 B1**
(45) Date de publication et mention de la délivrance du brevet: **26.11.1997**
(21) Numéro de dépôt: 95400805.8
(22) Date de dépôt: 10.04.1995
(51) Int. Cl.: B01D 53/047

(54) **Procédé de redémarrage d'un récipient de purification d'hydrogène par adsorption**
Verfahren zum Wiederstarten einer Adsorptionsvorrichtung zur Reiniging von Wasserstoff
Adsorbervessel restart process for the purification of hydrogen

(30) Priorité: 20.04.1994 FR 9404706
(43) Date de publication de la demande: 25.10.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fuentes, François, Houston, Texas 77077 (US)
(74) Mandataire: Mercey, Fiona Susan

(56) Documents cités:
- EP-A- 0 367 618
- EP-A- 0 458 350
- US-A- 4 077 779
- US-A- 4 349 357

## Description

La présente invention est relative à un procédé de redémarrage d'une installation de purification d'hydrogène par adsorption à variation de pression (PSA), laquelle installation, pendant un arrêt de son fonctionnement, a été dépressurisée puis inertée avec de l'azote. Elle s'applique par exemple au traitement des gaz de reformage à la vapeur d'hydrocarbures ou des gaz résiduaires des raffineries de pétrole.

Les pressions dont il est question ci-dessous sont des pressions absolues.

Pour des raisons de sécurité, les installations de type "PSA" (Pressure Swing Adsorption) destinées à purifier des gaz contenant de l'hydrogène doivent être dépressurisées et inertées avec de l'azote lors des arrêts.

Pour redémarrer l'installation, il faut tout d'abord ramener la pression des récipients en phase d'adsorption à la haute pression du cycle d'adsorption, qui est la pression de la charge ou "feed".

Pour cela, la technique habituelle consiste à introduire dans les récipients en question le gaz à traiter, préalablement détendu, cette introduction s'effectuant dans le sens dit "co-courant", qui est le sens de circulation dans ces récipients pendant la phase d'adsorption.

Outre le fait que ceci semble très naturel, puisqu'on anticipe de cette manière la phase d'adsorption sans aucune manoeuvre de vannes, on évite ainsi d'injecter les impuretés à éliminer dans le côté de sortie des récipients. Ceci est de toute manière impératif pour éviter de provoquer une pollution importante de la couche d'adsorbant la plus proche de cette sortie, constituée par du tamis moléculaire, par les hydrocarbures lourds et/ou aromatiques ou par l'eau contenue dans la charge.

Cependant, cette technique classique présente de sérieux inconvénients.

D'une part, lorsque la charge est introduite à co-courant sous une pression réduite en vue de la repressurisation, l'adsorption des impuretés par les premières couches d'adsorbant est peu efficace, et par suite une partie des impuretés atteint le tamis moléculaire.

En particulier, si la charge contient du CO₂, ce qui est le cas des gaz de reformage à la vapeur, il faut ensuite de nombreux cycles PSA pour désorber ce CO₂ du tamis moléculaire, ce qui conduit à une perte de production importante, typiquement de l'ordre de plusieurs heures. Et si la charge contient des hydrocarbures lourds et/ou aromatiques, ce qui est le cas des gaz résiduaires de raffineries de pétrole, ces substances conduiront à une pollution irréversible du tamis moléculaire, dégradant ainsi progressivement, à chaque arrêt, les performances de l'installation.

L'invention a pour but de minimiser la durée de démarrage des installations de purification d'hydrogène du type PSA tout en augmentant la longévité de leurs adsorbants.

A cet effet, l'invention a pour objet un procédé de redémarrage et des applications de ce procédé tels que revendiqués

On décrira ci-dessous deux exemples de mise en oeuvre de l'invention.

### Exemple 1:

On traite par adsorption PSA un gaz de reformage à la vapeur d'eau d'hydrocarbures contenant principalement un mélange H₂/CO₂ et, à titre d'impuretés minoritaires, CO, CH₄, N₂ et H₂O. La haute pression du cycle est de l'ordre de 20 à 30 bars. Chaque récipient d'adsorption contient successivement, dans le sens d'adsorption, une couche d'alumine, une couche de charbon et une couche de tamis moléculaire.

Lors d'un arrêt, ces récipients ont été dépressurisés, en général à contre-courant, puis emplis d'azote sous une faible pression de 2 à 3 bars.

Avec la technique classique précitée pour le redémarrage, la charge est introduite à co-courant, après détente, dans chaque récipient à mettre en phase d'adsorption. L'eau est arrêtée par l'alumine, mais du CO₂ parvient sur le tamis moléculaire. Avant de reprendre la production, il faut assurer la désorption de ce CO₂ par le PSA.

Pour une installation ayant une capacité nominale de production de 10 000 Nm³/h d'hydrogène, la durée de cette désorption préalable est d'environ 1 heure, ce qui correspond à une perte de production d'environ 10 000 Nm³ d'hydrogène.

Avec la technique de la présente invention, la repressurisation à contre-courant des récipients par de l'hydrogène pratiquement pur consomme 1 000 Nm³ d'hydrogène et dure 15 mn, ce qui correspond à une perte de production de 2 500 Nm³ d'hydrogène. La perte totale d'hydrogène est donc de 1 000 + 2 500 = 3 500 Nm³ d'hydrogène.

En comparant les deux procédés, on constate que celui de l'invention permet d'obtenir un gain global en hydrogène produit de 6 500 Nm³ à chaque redémarrage.

### Exemple 2:

On traite par adsorption PSA un gaz résiduaire de raffinerie de pétrole contenant 60 à 90% H₂, le reste étant des impuretés CₓH_{y}, dont des hydrocarbures lourds et des hydrocarbures aromatiques. La haute pression du cycle est de l'ordre de 30 bars. Chaque récipient d'adsorption contient successivement, dans le sens d'adsorption, une couche de charbon à gros pores, une couche de charbon à petits pores et une couche de tamis moléculaire.

Lors d'un arrêt, de nouveau, ces récipients ont été dépressurisés, en général à contre-courant, puis emplis d'azote sous une faible pression de 2 à 3 bars.

Avec la technique classique précitée, une partie des hydrocarbures lourds et aromatiques atteint le tamis moléculaire et le pollue de façon irréversible. De plus, pour éliminer les impuretés, notamment l'éthane, qui polluent ce tamis moléculaire de façon réversible pendant la repressurisation, il faut effectuer de nombreux cycles de désorption PSA.

Pour une installation ayant une capacité nominale de production de 10 000 Nm³/h d'hydrogène, la durée de cette désorption préalable est d'environ 2 heures, ce qui correspond à une perte de production d'environ 20 000 Nm³ d'hydrogène.

Avec la technique de la présente invention, la repressurisation à contre-courant des récipients par de l'hydrogène pratiquement pur consomme 1 700 Nm³ d'hydrogène, et dure 15 mn, ce qui correspond à une perte de production de 2 500 Nm³ d'hydrogène. La perte totale d'hydrogène est donc de 1 700 + 2 500 = 4 200 Nm³ d'hydrogène.

En comparant les deux procédés, on constate que celui de l'invention permet d'obtenir un gain global en hydrogène produit de 15 800 Nm³ à chaque redémarrage, et ce sans vieillissement du tamis moléculaire.

Comme on le voit, la consommation d'hydrogène pur impliquée par le procédé de l'invention est très largement compensée par la forte diminution de la durée du redémarrage. Ceci est dû à l'absence d'impuretés injectées à base pression, cette absence rendant possible la repressurisation à contre-courant, laquelle provoque le recul vers l'entrée des récipients du front d'impuretés non désorbées lors de l'inertage.

Dans chaque application, l'hydrogène pratiquement pur utilisé pour la repressurisation avant redémarrage peut être prélevé sur un réseau de distribution ou dans des récipients de conditionnement d'hydrogène. En particulier, il s'agira généralement d'hydrogène produit par l'installation elle-même avant l'arrêt en question.

## Revendications

1. Procédé de redémarrage d'un récipient d'adsorption faisant partie d'une installation de purification d'hydrogène par adsorption à variation de pression (PSA), lequel récipient, pendant un arrêt de son fonctionnement, a été dépressurisé puis inerté avec de l'azote, caractérisé en ce qu'on repressurise le récipient avec de l'hydrogène pratiquement pur jusqu'à la pression haute du cycle, puis on redémarre le cycle d'adsorption dans ce récipient.

2. Procédé suivant la revendication 1, caractérisé en ce qu'on effectue la repressurisation à contre-courant par rapport au sens d'adsorption dans le récipient.

3. Procédé suivant la revendication 1 ou 2, caractérisé en ce qu'on repressurise le récipient avec de l'hydrogène produit par l'installation avant ledit arrêt.

4. Application d'un procédé suivant l'une quelconque des revendications 1 à 3 au traitement d'un gaz de reformage catalytique d'hydrocarbures.

5. Application suivant la revendication 4, dans laquelle le récipient contient successivement, dans le sens d'adsorption, une couche d'alumine, une couche de charbon et une couche de tamis moléculaire.

6. Application d'un procédé suivant l'une quelconque des revendications 1 à 3 au traitement d'un gaz résiduaire de raffinerie de pétrole.

7. Application suivant la revendication 6, dans laquelle le récipient contient successivement, dans le sens d'adsorption, une couche de charbon à pores relativement grands, une couche de charbon à pores relativement petits et une couche de tamis moléculaire.

## Claims

1. Procedure for restarting an adsorption vessel forming part of a plant for purifying hydrogen by pressure variation adsorption (PSA), which vessel, during an interruption in its operation, has been depressurized and then inerted with nitrogen, characterized in that the vessel is repressurized with practically pure hydrogen to the high pressure of the cycle, and the adsorption cycle is restarted in this vessel.

2. Procedure according to claim 1, characterized in that repressurization is carried out in counter-current with respect to the adsorption direction in the vessel.

3. Process according to claim 1 or 2, characterized in that the vessel is repressurized with hydrogen produced by the plant before the said interruption.

4. Application of a process according to any of claims 1 to 3 to the treatment of a gas for the catalytic reforming of hydrocarbons.

5. Application according to claim 4, wherein the vessel contains successively, in the adsorption direction, a layer of alumina, a layer of charcoal and a layer of a molecular sieve.

6. Application of a process according to any of claims 1 to 3 to the treatment of a residual gas from an oil refinery.

7. Application according to claim 6, wherein the vessel contains successively, in the adsorption direction, a layer of charcoal having relatively large pores, a layer of charcoal having relatively small pores and a layer of a molecular sieve.

## Patentansprüche

1. Verfahren zum Wiederanfahren eines Adsorptionsrezipienten, der zu einer Vorrichtung zur Reinigung von Wasserstoff mittels Adsorption unter Druckveränderung gehört, wobei der Rezipient während einer Betriebspause auf Umgebungsdruck gebracht und anschließend mit Stickstoff inert gemacht wurde, dadurch gekennzeichnet, daß der Rezipient mit nahezu reinem Wasserstoff bis zum Erreichen des Zyklushochdrucks wiederbeschickt und anschließend der Adsorptionszyklus gestartet wird.

2. Verfahren nach Anspruch 1, dadurch gekennzeichnet, daß die Wiederbeschickung gegenstromartig zur Adsorption im Rezipienten stattfindet.

3. Verfahren nach Anspruch 1 oder 2, dadurch gekennzeichnet, daß der Rezipient mit Wasserstoff wiederbeschickt wird, der mittels der Vorrichtung vor der Pause hergestellt wurde.

4. Anwendung eines Verfahrens nach einem der Ansprüche 1 bis 3 zur Behandlung eines Gases zur katalytischen Umsetzung von Kohlenwasserstoffen.

5. Anwendung nach Anspruch 4, bei der der Rezipient in Adsorptionsrichtung nacheinander eine Aluminiumschicht, eine Kohleschicht und eine Molekularsiebschicht umfaßt.

6. Anwendung eines Verfahrens nach einem der Ansprüche 1 bis 3 zur Behandlung eines Restgases einer Erdölraffinerie.

7. Anwendung nach Anspruch 6, bei der der Rezipient in Adsorptionsrichtung nacheinander eine relativ großporige Kohleschicht, eine relativ kleinporige Kohleschicht und eine Molekularsiebschicht umfaßt.
